(19) Europäisches Patentamt
European Patent Office
Office européen des brevets

(11) **EP 4 074 655 A1**

(12) **EUROPEAN PATENT APPLICATION**
published in accordance with Art. 153(4) EPC

(43) Date of publication:
**19.10.2022 Bulletin 2022/42**

(21) Application number: **20899917.7**

(22) Date of filing: **02.12.2020**

(51) International Patent Classification (IPC):
***C01G 23/053*** $^{(2006.01)}$

(52) Cooperative Patent Classification (CPC):
**C01G 23/053**

(86) International application number:
**PCT/JP2020/044778**

(87) International publication number:
**WO 2021/117568 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.12.2019 JP 2019224915**

(71) Applicant: **Showa Denko K.K.
Tokyo 105-8518 (JP)**

(72) Inventors:
• **CHIKAMI, Hideaki**
**Toyama-shi, Toyama 931-8577 (JP)**
• **MIZUE, Kei**
**Toyama-shi, Toyama 931-8577 (JP)**
• **MATOBA, Hiroki**
**Toyama-shi, Toyama 931-8577 (JP)**

(74) Representative: **Strehl Schübel-Hopf & Partner
Maximilianstrasse 54
80538 München (DE)**

(54) **HIGHLY HEAT-RESISTANT ANATARSE-TYPE TITANIUM OXIDE AND METHOD FOR PRODUCING SAME**

(57)    Highly heat-resistant anatase-type titanium oxide particles stably retard an anatase-type crystal phase having excellent reactivity in a temperature range of 700 °C, and have fine particles and a uniform particle size distribution. The highly heat-resistant anatase-type titanium oxide includes titanium oxide particles having a content of an anatase crystal phase in the total crystal phases of 85% or more and a modification layer provided on the surfaces of the titanium oxide particles. The modification layer is obtained by modifying an organic acid having a molecular weight of 200 or less with an acidic solution containing $1.5 \times 10^{-4}$ mol/L or more and 0.12 mol/L or less. The pH of the acidic solution is 0.2 to 5.

EP 4 074 655 A1

**Description**

BACKGROUND OF THE INVENTION

Field of the Invention

The invention provides a highly heat-resistant anatase-type titanium oxide and a method for producing the same.

Priority is claimed on Japanese Patent Application No. 2019-224915, filed December 12, 2019, the contents of which are incorporated herein by reference.

Description of Related Art

Since titanium (IV) oxide ($TiO_2$) is a chemically stable material, it is industrially used as a white pigment in a wide range of fields. The main crystal structure of titanium oxide includes three kinds, an anatase phase, a brookite phase and a rutile phase. Among them, titanium oxide having a crystal structure of the anatase phase (anatase-type titanium oxide) has attracted attention in applications such as dielectric raw materials, materials for solar cells, electrode raw materials for lithium ion batteries, and photocatalytic materials. As an example, in the application of the dielectric raw material, when barium titanate is synthesized, anatase-type titanium oxide having high reactivity with a barium source raw material is preferable.

In recent years, anatase-type titanium oxide fine particles having a high specific surface area have become required in order to exhibit a higher function in these applications.

On the other hand, in a high temperature region, sintering and grain growth of titanium oxide particles proceed. Therefore, even if the titanium oxide fine particles are used as a raw material in the producing step of reacting at a high temperature, the particles grow and become coarse, and the advantage of the titanium oxide fine particles is lost.

As an example, in a producing step of synthesizing barium titanate from a barium source and titanium oxide, it is necessary to perform a reaction at 600 °C to 800 °C (Non-Patent Document 1). Therefore, there is a problem that not only does the barium titanate become coarse because of the grain growth of the particles progresses, but also the reaction becomes non-uniform. In this temperature range, anatase-type titanium oxide undergoes a phase transformation to rutile-type titanium oxide with low reactivity.

In a method for producing barium titanate from a barium source and titanium oxide, as an attempt to suppress grain growth of particles in a high temperature range, Patent Document 1 discloses a method in which an organic acid polymer is adsorbed on barium carbonate used as a barium source to enhance heat resistance of barium carbonate and to suppress grain growth by sintering.

In addition, Patent Document 2 discloses that barium tartrate is used as a barium source to suppress the growth of particles and obtain barium titanate fine particles.

Thus, a method for obtaining fine barium titanate by increasing the heat resistance of a barium source has been studied. On the other hand, there have been few reports on methods for improving the heat resistance of titanium oxide particles.

In the reaction between a barium source and titanium oxide, as exemplified by a method for producing barium titanate from barium carbonate and titanium oxide, the reaction proceeds due to diffusion of barium ions into titanium oxide. Therefore, if the heat resistance of the titanium oxide is not improved, the barium titanate coarsens and the particle size distribution of the barium titanate varies.

As a technique for improving the heat resistance of titanium oxide, a technique of doping with a heterologous element, as disclosed in Non-Patent Document 2 and Patent Document 3, is known. However, the method has a problem of reducing the purity of the product.

There is also a method in which the surface of titanium oxide is modified with an organic polymer, but this has a problem that the purity of the product is decreased because the polymer is not completely decomposed and remains even in a high temperature region as in Patent Document 4.

[Prior Art Documents]

[Patent Document]

Patent Document 1: Japanese Unexamined Patent Application Publication No. 2004-149349
Patent Document 2: Japanese Unexamined Patent Application Publication No. 2019-119630
Patent Document 3: Japanese Unexamined Patent Application Publication No. H07-267641

Patent Document 4: J Japanese Unexamined Patent Application Publication No. 2013-155052

[Non-Patent Documents]

Non-Patent Document 1: H. S. Potdar., et al., J. Am. Ceram. Soc., 79, (10), 2795 (1996)
Non-Patent Document 2: Y. Iida, and S. Ozaki, J. Am. Ceram. Soc., 44,120 (1961)

SUMMARY OF THE INVENTION

[Problems to be Solved by the Invention]

As described above, the anatase-type titanium oxide fine particles are sintered, grow and undergo a phase transformation in a high temperature range.
Therefore, conventional anatase-type titanium oxide fine particles have a problem that they are not suitable for use in a reaction which is carried out at a high reaction temperature. The present invention solves this problem.

[Means for Solving Problems]

After anatase-type titanium oxide is precipitated by hydrolysis of titanium tetrachloride, a low-molecular-weight organic acid having a molecular weight of 200 or lower is added in a prescribed amount. As a result, it was found that the low-molecular-weight organic acid modifies and stabilizes the surface of the titanium oxide, so that the heat resistance becomes extremely high compared to that of conventional titanium oxide. The titanium oxide produced by this method has advantages of stably retarding an anatase-type crystal phase having excellent reactivity in a temperature range of 700 °C, and having fine particles and uniform particle size distribution when compared with the titanium oxide produced by the conventional method.
That is, the structure of the present invention for solving the above problems is as follows.

[1] A highly heat-resistant anatase-type titanium oxide, comprising

titanium oxide particles containing an anatase crystal phase at a content of 85% or more in the total crystal phases, and
a modification layer provided on surfaces of the titanium oxide particles,
wherein the modification layer is obtained by modifying the particles by using an acidic solution containing an organic acid having a molecular weight of 200 or less at a content of $1.5 \times 10^{-4}$ mol/L or more and 0.12 mol/L or less, and
a pH of the acidic solution is 0.2 to 5.

[2] The highly heat-resistant anatase-type titanium oxide according to [1],
wherein the organic acid is at least one kind of organic acid selected from the group consisting of lactic acid, succinic acid, malic acid, tartaric acid and citric acid.
[3] The highly heat-resistant anatase-type titanium oxide according to [1] or [2],
wherein a BET specific surface area of the titanium oxide particles is 300 to 500 $m^2/g$.
[4] The highly heat-resistant anatase titanium oxide described in any one of [1] to [3],
wherein, in the acidic solution, the molar ratio of the total amount A of the organic acid to the amount T of the titanium oxide particles in terms of metal titanium (A/T, mol/mol) is $1.5 \times 10^{-4}$ or more and 0.12 or less.
[5] The highly heat-resistant anatase titanium oxide described in any one of [1] to [4], which satisfies all of the following (i) to (iii),

(i) the content of the anatase crystal phase in the total crystal phases after calcination at 700 °C for 2 hours is 80% or more;
(ii) the D100 calculated from a SEM image of the titanium oxide after calcination at 700 °C for 2 hours is 200 nm or less; and
(iii) D100/D50 is 1.98 or less wherein the particle sizes D100 and D50 are calculated from the SEM image of the titanium oxide after calcination at 700 °C for 2 hours.

[6] The highly heat-resistant anatase-type titanium oxide according to any one of [1] to [5], wherein the titanium oxide particles contain the anatase crystal phase at a content of 100% in the total crystal phase.

[7] A method for producing the highly heat-resistant anatase-type titanium oxide, comprising

modifying titanium oxide particles with an acidic solution containing $1.5 \times 10^{-4}$ mol/L or more and 0.12 mol/L or less of an organic acid having a molecular weight of 200 or less,
wherein a content of the anatase crystal phase of the titanium oxide particles before modification in the total crystal phases is 85% or more, and
a pH of the acidic solution is 0.2 to 5.

[8] The method for producing the highly heat-resistant anatase-type titanium oxide according to [7], further comprising

producing titanium oxide particles prior to the modification of the titanium oxide particles,
wherein the step of producing titanium oxide particles is a step of obtaining a dispersion liquid of the titanium oxide particles by depositing titanium oxides through a hydrolysis reaction of titanium tetrachloride.

[9] The method for producing the highly heat-resistant anatase-type titanium oxide according to [7] or [8], wherein the organic acid is at least one kind of organic acid selected from the group consisting of lactic acid, malic acid, tartaric acid and citric acid.

[10] The method according to any one of [7] to [9], wherein the BET specific surface area of the titanium oxide particles is 300 to 500 $m^2$/g in the step of producing the titanium oxide particles.

[11] The method for producing the highly heat-resistant anatase titanium oxide according to any one of [7] to [10], wherein, in the modification step of the titanium oxide particles, in the acidic solution, a molar ratio of the total amount A of the organic acid to the amount T of the titanium oxide particles before modification (A/T, mol/mol) is $1.5 \times 10^{-4}$ or more and 0.12 or less.

[12] The method for producing the highly heat-resistant anatase-type titanium oxide according to any one of [8] to [11], wherein, in the step of producing the titanium oxide particles, sulfuric acid is added in the hydrolysis reaction of the titanium tetrachloride.

[13] The method for producing the highly heat-resistant anatase-type titanium oxide according to any one of [7] to [12], further comprising: purifying the highly heat-resistant anatase-type titanium oxide by separating the highly heat-resistant anatase-type titanium oxide and impurities using at least one kind selected from the group consisting of an ultrafiltration membrane, a reverse osmosis membrane, an ion exchange resin and an electrodialysis membrane.

[Effect of the Invention]

The highly heat-resistant anatase-type titanium oxide particle of the present invention can stably retard an anatase-type crystal phase having excellent reactivity in a temperature range of 700 °C, and has fine particles and uniform particle size distribution.

BRIEF DESCRIPTION OF THE DRAWINGS

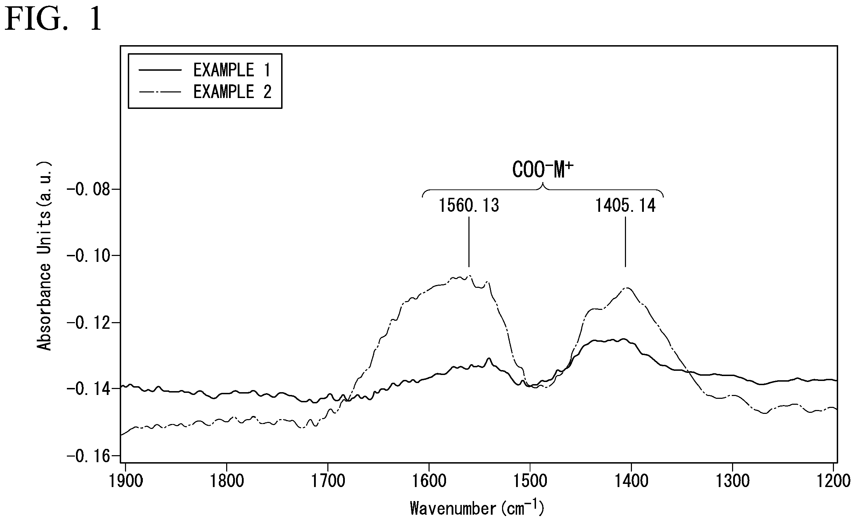

FIG. 1 is an FT-IR (ATR) measurement of a highly heat-resistant anatase-type titanium oxide obtained in Examples 1 and 2.

DETAILED DESCRIPTION OF THE INVENTION

Hereinafter, a highly heat-resistant anatase-type titanium oxide according to an embodiment of the present invention and a method for producing the same will be described.

Here, the term "titanium oxide" refers to titanium dioxide (IV) ($TiO_2$) unless otherwise specified. The term "Ti" refers to all titanium atoms constituting a compound, ion, complex, etc., unless otherwise specified.

The terms "amount of Ti" and "amount in terms of metal titanium" are the amount in terms of titanium atom of a compound such as a precursor of titanium oxide or titanium oxide in units of mol or g.

The terms "Ti concentration", "amount concentration of Ti", and "concentration in terms of Ti atoms" mean a concentration of all titanium atoms constituting a compound, ion, complex, etc., and particularly, a concentration in terms of titanium atoms of a compound such as a titanium oxide precursor or titanium oxide in units of mol/L (molar concentration) or % by mass (mass concentration).

EP 4 074 655 A1

<1. Highly Heat-Resistant Anatase-Type Titanium Oxide>

The highly heat-resistant anatase-type titanium oxide (hereinafter, the term "highly heat-resistant anatase-type titanium oxide" is sometimes shortened to "highly heat-resistant titanium oxide") includes titanium oxide particles having a content of the anatase crystal phase of 85% or more in the total crystal phases, and a modification layer provided on the surfaces of the titanium oxide particles. The modification layer is obtained by modifying the particles by using an acidic solution containing $1.5 \times 10^{-4}$ mol/L or more and 0.12 mol/L or less of an organic acid having a molecular weight of 200 or less. The pH of the acidic solution is 0.2 to 5.

The highly heat-resistant anatase-type titanium oxide is preferably a titanium oxide satisfying all of the following (i) to (iii).

(i) the content of the anatase crystal phase in the total crystal phases after calcination at 700 °C for 2 hours is 80% or more;
(ii) the D100 calculated from a SEM image of the titanium oxide after calcination at 700 °C for 2 hours is 200 nm or less; and
(iii) D100/D50 is 1.98 or less wherein the particle sizes D100 and D50 are calculated from the SEM image of the titanium oxide after calcination at 700 °C for 2 hours.

In the highly heat-resistant anatase-type titanium oxide of the present embodiment, $COO^-M^+$ peaks were observed by the FT-IR measurement method described in an example (FIG. 1). This is considered to show that the bonding between the surfaces of titanium oxide particles and the organic acid was formed. Although the quantitative relationship between the $COO^-M^+$ peak intensity and the organic acid bound to the particle surfaces is still unknown, a certain dependence was observed on the concentration of the organic acid contained in the acidic solution used (Fig. 1).

In the present invention, the "highly heat-resistant anatase titanium oxide" is also referred to as "modification-layer-containing titanium oxide", "calcined titanium oxide", or "modified titanium oxide". The highly heat-resistant anatase-type titanium oxide contains titanium oxide particles that contain no modification layer and those that have a modification layer formed on the surfaces of the particles. The "titanium oxide particles" which do not contain the modification layer are sometimes referred to as "titanium oxide particles before modification" or "unmodified titanium oxide particles". The titanium oxide obtained by calcining the highly heat-resistant anatase-type titanium oxide at 700 °C (for example, calcination at 700 °C for 2 hours.) is sometimes referred to as "titanium oxide calcined at 700 °C" or "calcined titanium oxide".

Further, in the producing method of one embodiment of the present invention that will be described later, titanium oxide particles precipitated by hydrolysis of titanium tetrachloride are modified in an acidic dispersion before aggregation, and then purified. Then, highly heat-resistant anatase-type titanium oxide aggregated by a change in zeta potential accompanying a change in pH in the process is obtained. The titanium oxide particles dispersed in the acidic dispersion after hydrolysis of titanium tetrachloride and before modification are referred to as "titanium oxide particles precipitated by hydrolysis of titanium tetrachloride".

<1-1. Titanium Oxide Particles Before Modification>

Titanium oxide particles before modification constituting the highly heat-resistant anatase-type titanium oxide in the present embodiment are anatase-type titanium oxide particles in which the content of the anatase crystal phase in the total crystal phases is 85% or more. The content of the anatase crystal phase in the total crystal phases is preferably 90% or more, more preferably 95% or more, and still more preferably 100%. When the content of the anatase crystal phase in the total crystal phases is 85% or more, there is an effect of improving the reactivity of titanium oxide with other substances.

A method for evaluating the content of the anatase crystal phase in the total crystal phases will be described in detail in the examples.

The BET specific surface area of the titanium oxide particles before modification according to the present embodiment is preferably 300 $m^2/g$ or more and 500 $m^2/g$ or less, more preferably 380 $m^2/g$ or more and 500 $m^2/g$ or less, and still more preferably 400 $m^2/g$ or more and 450 $m^2/g$ or less. When the BET specific surface area is 300 $m^2/g$ or more, when titanium oxide is reacted with another substance, an ultrafine particle material represented by the material of a multilayer ceramic capacitor having a 0201 size is obtained. When the BET specific surface area is 500 $m^2/g$ or less, since the crystallinity of the particles is high, abnormal grain growth of titanium oxide can be suppressed because the reaction is carried out at a high temperature, and there is an effect of uniformizing the grain size distribution of the obtained material.

The method of measuring the BET specific surface area will be described in detail in the examples.

The main peak intensity width obtained by the X-ray diffraction (XRD) measurement of the titanium oxide particles before modification according to the present embodiment is preferably 1.5° or less, more preferably 1.2° or

5

more and 1.5° or less, and still more preferably 1.3° or more and 1.45° or less. When the main peak intensity width obtained by the X-ray diffraction (XRD) measurement of the titanium oxide particles is 1.5° or less, the crystallinity of the nanoparticles is high, and since the particles are reacted at a high temperature, abnormal grain growth of the titanium oxide can be suppressed, and there is an effect of uniformizing the particle size distribution of the obtained material.

The X-ray diffraction (XRD) for evaluating the crystallinity of the titanium oxide particles before modification according to the present embodiment is measured as follows.

X-ray source: X-ray diffraction measurement by Cu-K$\alpha$1 ray
Peak position: $2\theta = 24.5°$ to $26.0°$

The titanium oxide particles before modification according to the present embodiment are preferably nanoparticles. The term "nanoparticles" herein refers to particles having an average primary particle size of 0.5 nm to 100 nm. The average primary particle size can be calculated from the BET specific surface area by an evaluation method that will be described later.

The average particle size of aggregates of primary particles of titanium oxide before modification according to the present embodiment is preferably 100 nm or less, preferably 5 nm or more and 80 nm or less, and more preferably 10 nm or more and 50 nm or less. When the average particle diameter of the aggregates is larger than 100 nm, it is not preferable because titanium oxide whose surface is not modified by the organic acid is produced when the organic acid is added. The agglomerated particles are, for example, particles obtained by agglomerating primary particles of titanium oxide having an average particle size of 3 to 5 nm.

In addition, when the aggregates of primary particles of titanium oxide are fine particles having an average particle diameter of 5 nm or less, it is not preferable because purification becomes extremely difficult and productivity decreases.

An evaluation of the average particle size of the aggregates was carried out by taking 1 mL of a slurry of titanium oxide after synthesis, diluting it 100 times, and measuring it using a dynamic light scattering method (Dynamic Light Scattering, DLS).

The particle size distribution of the titanium oxide particles before modification according to the present embodiment has the following characteristics.

(i) As particle size of the aggregates of the primary particles measured by DLS, D 90 is preferably 100 nm or less, and more preferably 50 nm or less.
(ii) D90/D50 is preferably 1.98 or less, more preferably 1.90 or less, and still more preferably 1.85 or less when the particle size of the aggregates of the primary particles is measured by DLS.

When D90/D50 exceeds 1.98, the particle size of the titanium oxide before modification is uneven. Even if such titanium oxide is modified with an organic acid, the particle size becomes non-uniform after calcination at 700 °C for 2 h. Therefore, when the reaction is carried out in the high temperature region using such titanium oxide as a raw material, a product having a uniform particle size distribution cannot be obtained.

A method for measuring the particle size of the aggregates of the primary particles by dynamic light scattering (DLS) will be described in detail with reference to the examples.

In the producing method that will be described later in the present embodiment, the titanium oxide particles deposited by hydrolysis of titanium tetrachloride are modified in an acidic dispersion before aggregation. Thereafter, the modified particles are aggregated and purified to obtain a highly heat-resistant anatase-type titanium oxide. In such embodiments, the particle size, anatase crystal content, BET specific surface area, etc. of the titanium oxide particles before modification are evaluated as follows. First, a slurry containing unmodified titanium oxide particles or a powder of unmodified titanium oxide particles is obtained by aggregating and purifying the titanium oxide particles deposited by hydrolysis of titanium tetrachloride without modification using an organic acid. The resulting slurry or unmodified titanium particle powder is then evaluated according to the evaluation method described in the examples. Alternatively, the modified titanium oxide (highly heat-resistant anatase-type titanium oxide) powder may be evaluated.

The highly heat-resistant anatase-type titanium oxide after the modification has substantially the same characteristics as the unmodified titanium oxide particles constituting the highly heat-resistant anatase-type titanium oxide, such as particle size, anatase crystal content, and BET specific surface area. That is, in the present embodiment, the modification by a predetermined amount of a low-molecular-weight organic acid is considered to merely modify the surfaces of the particles, and there is no change in the characteristics of the bulk titanium oxide particles, at least in characteristics such as the particle size, the anatase crystal content, and the BET specific surface area.

<1-2. Low-Molecular-Weight Organic Acid Modification Layer>

The modification layer constituting the highly heat-resistant anatase-type titanium oxide in the present embodiment (hereinafter referred to as a "low-molecular-weight organic acid modification layer" or "organic acid modification layer") is formed by modifying, with an acidic solution, a surface of titanium oxide particles before modification. The acidic solution contains $1.5 \times 10^{-4}$ mol/L or more and 0.12 mol/L or less of an organic acid having a molecular weight of 200 or less.

The term "modification layer" of the present invention means that a part of an organic acid or a structure derived from an organic acid as a modifying agent may be fixed to at least a part of the surfaces of the titanium oxide particles, and the entire surfaces need not be covered. In addition, at the time of filing the present application, the film thickness of the modification layer could not be evaluated by ordinary measuring means of the applicant. Therefore, the modification layer formed by changing the physical properties of the surfaces of the titanium oxide particles through the interaction (for example, surface reactions) between the organic acid as the modifier and the surfaces of the titanium oxide particles may also be included as one embodiment of the present invention. The fixing method is not particularly limited, and it is only necessary that the modification layer be able to be fixed without being separated from the particle surfaces even if it is treated in a subsequent purification step. Specific examples of methods for immobilization include chemical bonding, strong physical adsorption, etc. The presence or absence of the modification layer was determined by FT-IR measurement, which will be described later.

"Low-Molecular-Weight Organic Acids"

An organic acid used for forming the low-molecular-weight organic acid modification layer has a molecular weight of 200 or less. For example, at least one organic acid selected from the group consisting of lactic acid, succinic acid, malic acid, tartaric acid and citric acid is used. The organic acid preferably has a molecular weight of 140 or less. For example, at least one organic acid selected from the group consisting of lactic acid, succinic acid and malic acid is used. The organic acid preferably has a molecular weight of 100 to 140. Examples include malic acid and succinic acid. The reason why the organic acid having a molecular weight of 200 or less is effective is presumed to be that the molecular size of the organic acid is appropriate for the size of the titanium oxide nanoparticles to be modified.

Since an organic acid having a molecular weight of 200 or less is used for the low-molecular-weight organic acid modification layer, the obtained titanium oxide is excellent in heat resistance, retards an anatase type in a high temperature region, and suppresses sintering and grain growth.

The method of forming the organic acid modification layer is not particularly limited. For example, the acidic solution for modification may be an acidic dispersion obtained by adding an organic acid having a molecular weight of 200 or less to a dispersion of titanium oxide particles precipitated by hydrolysis of titanium tetrachloride, and adding an inorganic acid such as sulfuric acid if necessary. In this case, the titanium oxide content in the dispersion of the titanium oxide particles precipitated by the hydrolysis of the titanium tetrachloride is preferably 0.60 mol/L or more and 1.3 mol/L or less, more preferably 0.65 mol/L or more and 1.3 mol/L or less, and still more preferably 0.70 mol/L or more and 1.1 mol/L or less.

That is, a predetermined amount of a low-molecular-weight organic acid is added to the acidic dispersion of the titanium oxide particles deposited by hydrolysis to form a modification layer on the surface of the titanium oxide particles in a dispersed state. As a result, highly heat-resistant anatase-type titanium oxide particles in a dispersed state are obtained in an acidic dispersion.

The acidic dispersion for modification has a pH of 0.2 to 5, preferably 0.5 to 3, and more preferably 0.5 to 1.5. That is, the pH of the dispersion after the addition of the organic acid to the dispersion of the titanium oxide particles precipitated by the hydrolysis of titanium tetrachloride is 0.2 to 5, preferably 0.5 to 3, and more preferably 0.5 to 1.5. When the pH is 5 or less, since the titanium oxide particles do not pass through the isoelectric point of the anatase titanium oxide, aggregation of the titanium oxide particles is suppressed, and the surface of the titanium oxide particles in a dispersed state can be uniformly modified by using an organic acid. When the pH is 0.2 or more, the damage to the titanium oxide particles caused by a strong acid can be suppressed but the acidity can still be sufficiently strong.

"Modification Amount of Low-Molecular-Weight organic Acid"

The amount of modification of the low-molecular-weight organic acid modification layer in the highly heat-resistant anatase-type titanium oxide in the present embodiment is not particularly limited, but can be adjusted by using the amount of organic acid used, if necessary. For example, the addition amount of the organic acid in the dispersion containing the organic acid and the titanium oxide particles can be adjusted.

In one example, the mass ratio of the total amount A of the organic acids to the amount T of Ti of the titanium oxide particles (A/T, g/g) is preferably $1.5 \times 10^{-4}$ or more and 0.12 or less, more preferably 0.005 or more and 0.05 or less, after all the organic acids are added. The amount T of Ti means "amount in terms of Ti atom" or "amount in terms of metallic titanium". It is more preferably 0.007 to 0.010. By adjusting the mass ratio of the total amount A of the organic acid and the amount T of Ti of the titanium oxide particles (A/T, g/g) to a range of $1.5 \times 10^{-4}$ or more and 0.12 or less, the obtained highly heat-resistant anatase-type titanium oxide can exhibit predetermined heat resistance. Further, since abnormal grain growth does not occur when calcined at a high temperature, the grain size of the final product obtained by using the titanium oxide can be made uniform. When the organic acid is added to the acidic dispersion of the titanium oxide particles, the content of the titanium oxide in the acidic dispersion is not particularly limited, but is preferably 0.6 to 1.3 mol/L.

In another example, after all organic acids have been added, the total concentration of organic acids is $1.5 \times 10^{-4}$ mol/L or more and 0.12 mol/L or less. It is more preferably $1.5 \times 10^{-3}$ mol/L or more and 0.080 mol/L or less. It is more preferably 0.005 mol/L or more and 0.050 mol/L or less. By adjusting the total concentration of the organic acid to a range of $1.5 \times 10^{-4}$ mol/L or more and 0.12 mol/L or less, the obtained highly heat-resistant anatase-type titanium oxide can exhibit predetermined heat resistance. Further, since abnormal grain growth does not occur when calcined at a high temperature, the grain size of the final product obtained by using the titanium oxide can be made uniform. When the organic acid is added to the acidic dispersion of the titanium oxide particles, the content of the titanium oxide in the acidic dispersion is not particularly limited, but is preferably 0.6 mol/L to 1.3 mol/L.

Therefore, according to the highly heat-resistant anatase-type titanium oxide of the present embodiment, the anatase-type titanium oxide fine particles having a low rutile conversion ratio at 700 °C, a fine particle size and a uniform particle size distribution can be provided.

<1-3. Highly Heat-Resistant Anatase-Type Titanium Oxide>

The highly heat-resistant anatase-type titanium oxide in the present embodiment is preferably a modification-layer-containing titanium oxide satisfying all of the following (i) to (iii).

(i) After the titanium oxide containing the modification layer is calcined at 700 °C for 2 hours, the content of the anatase crystal phase in the total crystal phases of the obtained titanium oxide is 80% or more;
(ii) after the titanium oxide containing the modification layer is calcined at 700 °C for 2 hours, the D100 calculated from SEM image analysis of the obtained titanium oxide is 200 nm or less; and
(iii) after the titanium oxide containing the modification layer is calcined at 700 °C for 2 hours, D100/D50 is 1.98 or less wherein the particle sizes D100 and D50 are calculated from SEM image analysis of the obtained titanium oxide.

The highly heat-resistant anatase-type titanium oxide in the present embodiment is preferably titanium oxide satisfying all of the following (i) to (iv).

(i) After the titanium oxide containing the modification layer is calcined at 700 °C for 2 hours, the content of the anatase crystal phase in the obtained total crystal phases is 85% or more;
(ii) after the titanium oxide containing the modification layer is calcined at 700 °C for 2 hours, the D100 calculated from an SEM image of the obtained titanium oxide is 200 nm or less;
(iii) after the modification-layer-containing titanium oxide is calcined at 700 °C for 2 hours, D100/D50 is 1.98 or less wherein the particle sizes D100 and D50 are calculated from SEM image analysis of the obtained titanium oxide; and
(iv) in the obtained calcined titanium oxide, the residual carbon amount measured by XRF is 10 ppm by mass or less. It is preferably 8 ppm by mass or less, and most preferably 6 ppm or less.

The method for evaluating D50 and D100 of the titanium oxide after calcination, the content of the anatase crystal phase in the total crystal phases, and the residual carbon amount will be described in detail in the following examples.

<1-4. Calcined Titanium Oxide>

After the highly heat-resistant anatase-type titanium oxide in the present embodiment is calcined at 700 °C for 2 hours, calcined titanium oxide having the following characteristics is preferable.

(i) The content of the anatase crystal phase of the crystal phase in the calcined titanium oxide at 700 °C for 2 hours is 80% or more;
(ii) D100 calculated from an SEM image of the calcined titanium oxide at 700 °C for 2 hours is 200 nm or less;
(iii) D100/D50 is 1.98 or less wherein the particle sizes D100 and D50 are calculated from the SEM image of the calcined titanium oxide at 700 °C for 2 hours; and

(iv) in the obtained calcined titanium oxide, the residual carbon amount measured by XRF is 10 ppm by mass or less, preferably 8 ppm by mass or less, and most preferably 6 ppm or less. When the residual carbon content exceeds 10 ppm by mass, impurities derived from the residual carbon are generated when titanium oxide is reacted with other elements. As a result, the purity of the product is decreased, causing quality deterioration.

<2. Method for Producing Highly Heat-Resistant Anatase-Type Titanium Oxide>

The method for producing the highly heat-resistant anatase-type titanium oxide according to the present embodiment includes a step of modifying titanium oxide particles. The modification step of the titanium oxide particle is a step of modifying the titanium oxide particles before the modification with an acidic solution wherein the content of the anatase crystal phase of the titanium oxide particles before the modification in the total crystal phases is 85% or more. The acidic solution contains $1.5 \times 10^{-4}$ mol/L or more and 0.12 mol/L or less of an organic acid having a molecular weight of 200 or less. The pH of the acidic solution is 0.2 to 5.

The method for producing the highly heat-resistant anatase-type titanium oxide according to the present embodiment preferably includes a step of producing titanium oxide particles before the modification and a step of modifying the titanium oxide particles. The step of producing titanium oxide particles before modification is a step of depositing titanium oxide by a hydrolysis reaction of titanium tetrachloride to obtain a dispersion containing titanium oxide particles. The step of modifying the titanium oxide particles is a step of adding an organic acid to the dispersion obtained in the step of producing the titanium oxide particles before modification to form a modification layer on the surface of the titanium oxide particles. That is, it is preferable that the titanium oxide particles having a content of the anatase crystal phase in the total crystal phases of 85% or more obtained in the step of producing the titanium oxide particles before the modification be used in the next modification step in a state in which they are dispersed in the dispersion. In addition, it is preferable that the method for producing the highly heat resistance anatase-type titanium oxide according to the present embodiment enable production of the highly heat resistance anatase-type titanium oxide described in <1. Highly Heat-Resistant Anatase-Type Titanium Oxide>.

Each step will be described below.

<2-1. Step of Producing Titanium Oxide Particles>

The step of producing titanium oxide particles preferably includes a dilution step of preparing a precursor solution of titanium oxide and a step of synthesizing titanium oxide particles by a hydrolysis reaction of titanium tetrachloride. The method for synthesizing the titanium oxide particles is not particularly limited as long as the titanium oxide particles having a content of the anatase crystal phase in the total crystal phases of 85% or more, preferably 95% or more, and more preferably 100% can be produced. The method for synthesizing the titanium oxide particles preferably produces the titanium oxide particles having a BET specific surface area of 300 m²/g or more and 500 m²/g or less, more preferably 380 m²/g or more and 500 m²/g or less, and still more preferably 400 m²/g or more and 450 m²/g or less.

"Dilution Step"

In the dilution step, water is added to a titanium tetrachloride solution having a concentration in terms of Ti atoms (Ti concentration) of 14% by mass or more and 19% by mass or less and diluted to obtain a precursor solution of titanium oxide. It is preferably an aqueous solution. The water used here is preferably pure water.

In this case, a strong acid such as hydrochloric acid may be added, but the strong acid to be added is preferably sulfuric acid. The temperature of the aqueous solution at the time of addition may be room temperature (for example, 25 °C).

As the additive amount of the strong acid, the molar ratio of the amount of the strong acid to the amount of Ti, strong acid (mol)/Ti (mol), is preferably 0.04 to 0.10, more preferably 0.05 to 0.09, and still more preferably 0.06 to 0.08.

The concentration in terms of titanium atoms (Ti concentration) of the diluted titanium oxide precursor aqueous solution is preferably 0.60 mol/L or more and 1.3 mol/L or less, and more preferably 0.70 mol/L or more and 1.1 mol/L or less. When the Ti concentration of the titanium tetrachloride aqueous solution is 0.6 mol/L or more, the titanium tetrachloride reacts with water and it is unlikely to form an unstable hydroxide. As a result, it is considered that the possibility of forming the nucleus of rutile-type or brookite-type titanium oxide is low (for example, see Non-Patent Document 3, Z. Wang et al, J. Colloid interface Sci. 448,280-286 (2015)). When the Ti concentration of the titanium tetrachloride aqueous solution is 1.3 mol/L or less, since the number of precipitated particles is small, the aggregation during synthesis slows down, and a slurry containing dispersed nanoparticles can be obtained. For example, 0.92 mol/L titanium tetrachloride aqueous solution was used in the examples.

When a strong acid is added to a diluted aqueous solution of a precursor of titanium oxide, the pH of the aqueous solution after the addition is 5 or less, preferably 3 or less, and more preferably 0.5 or more and 1 or less. When the pH exceeds 5, it approaches the isoelectric point of titanium oxide, and the deposited titanium oxide is aggregated. In addition, when the pH becomes 1 or less, titanium oxide with low crystallinity is unlikely to precipitate, and the obtained titanium oxide has high crystallinity, which improves the heat resistance of the titanium oxide. On the other hand, when the pH is 0.5 or less, the deposition rate of titanium oxide slows down and productivity decreases, which is undesirable.

"Synthesis Step of Titanium Oxide by Hydrolysis Reaction"

In the precursor solution of titanium oxide obtained in the dilution step, titanium oxide is synthesized at a reaction temperature T [°C] to deposit titanium oxide particles. The reaction temperature T is preferably not less than 60 °C and not more than the boiling point of the reaction solution. For example, in the case of an aqueous solution, the reaction temperature T is preferably 60 °C or more and 100 °C or less, more preferably 70 °C or more and 95 °C or less, and still more preferably 75 °C or more and 90 °C or less. The reaction temperature T is preferably determined within a preferable range with respect to the concentration in terms of Ti atoms (hereinafter referred to as "Ti concentration", in mol/L) of the precursor solution of titanium oxide adjusted in the dilution step.

If the temperature of the reaction solution before this step is lower than the reaction temperature T, the reaction solution is heated. In view of productivity, it is preferable to heat the reaction solution quickly. However, in order to suppress the precipitation of amorphous titanium oxide and improve the crystallinity, it is preferable to suppress the rapid progress of the reaction and to suppress the temperature rising rate to sufficiently grow the crystal. Therefore, heating the reaction liquid to reach the target temperature, that is, the reaction temperature T, is preferably carried out at a temperature raising rate of 0.05 °C/min or more and 1.5 °C/min or less, more preferably 0.1 °C/min or more and 1.0°C/min or less, and still more preferably 0.2 °C/min or more and 1.0 °C/min or less.

It is experimentally known that the reaction for producing titanium oxide from the reaction solution is an endothermic reaction. Therefore, in order to maintain the above temperature by suppressing the temperature raising rate and the decrease of the temperature during heating, it is preferable to cover the periphery of the reaction vessel with a heat insulating material or the like and uniformly heat the reactor with a heater capable of adjusting the amount of heat supplied by a mantle heater, a steam jacket or the like.

In this step, it is preferable that the retarding time after the heating is completed and the temperature of the reaction liquid reaches the reaction temperature T be short in consideration of productivity. The retention time of the reaction temperature is preferably 5 hours or less, more preferably 3 hours or less, still more preferably 2 hours or less, and most preferably 0 hours. In this step, the reaction liquid is preferably stirred.

<2-2. Step of Modifying Titanium Oxide Particles>

After obtaining the dispersion of the titanium oxide particles before modification through the hydrolysis, the titanium oxide particles in the dispersion may be isolated and purified to obtain the powder of the titanium oxide particles before modification, before the surfaces of the titanium oxide particles are modified. That is, the surfaces of the titanium oxide particles may be modified with an acidic solution by using the powder of the titanium oxide particles before the modification. The acidic solution contains not less than $1.5 \times 10^{-4}$ mol/L and not more than 0.12 mol/L of an organic acid having a molecular weight of not more than 200. However, from the viewpoint of enabling the particle surfaces to be more uniformly modified, it is preferable to modify the surfaces of the titanium oxide particles without isolating the titanium oxide particles after the titanium oxide particles are obtained by hydrolysis. That is, it is preferable that the surfaces of the titanium oxide particles be modified by adding an organic acid having a molecular weight of 200 or less to the dispersion to prepare an acidic dispersion. The acidic dispersion contains $1.5 \times 10^{-4}$ mol/L or more and 0.12 mol/L or less of the organic acid. The organic acid may be directly added to the dispersion or a prepared solution may be added.

"pH of Dispersion"

The pH of an acidic dispersion obtained by adding an organic acid to an acidic solution containing the organic acid or a dispersion obtained by precipitation by hydrolysis is 0.2 or more and 5 or less, preferably 0.5 or more and 3 or less, and more preferably 0.5 or more and 1.5 or less. At this time, when the pH is 5 or less, since the anatase titanium oxide does not pass through the isoelectric point, the aggregation of the titanium oxide particles is suppressed, and the organic acid can be uniformly modified on the surface of the titanium oxide. When the pH is 0.2 or more, the titanium oxide particles can be prevented from being damaged by a strong acid but the acid can still be sufficiently strong.

"Types of Organic Acids"

The organic acid to be added is a low-molecular-weight organic acid having a molecular weight of 200 or less. When an organic acid polymer is added, since the polymer chain is long with respect to the deposited titanium oxide particles, the surface of titanium oxide cannot be uniformly modified, and highly heat-resistant titanium oxide cannot be obtained.

As the low-molecular-weight organic acid having a molecular weight of 200 or less, a carboxylic acid such as succinic acid is preferable, and an $\alpha$-hydroxycarboxylic acid is more preferable. For example, at least one organic acid selected from the group consisting of lactic acid, succinic acid, malic acid, tartaric acid and citric acid is used. The organic acid preferably has a molecular weight of 140 or less. For example, at least one organic acid selected from the group consisting of lactic acid, succinic acid and malic acid is used. The organic acid preferably has a molecular weight of 100 to 140. Examples include malic acid and succinic acid. The reason why the organic acid having a molecular weight of 200 or less is effective is presumed to be that the molecular size of the organic acid is appropriate for the size of the titanium oxide nanoparticles to be modified.

Since an organic acid having a molecular weight of 200 or less is used for the modification layer obtained by modifying titanium oxide with the low-molecular-weight organic acid, the surface of titanium oxide can be uniformly modified. Further, the obtained titanium oxide is excellent in heat resistance, and sintering and grain growth are suppressed in a high temperature range.

"Addition Amount of Low-Molecular-Weight Organic Acid"

In the modification step, the amount of the organic acid added can be adjusted so as to obtain an acidic solution containing an organic acid having a molecular weight of 200 or less of $1.5 \times 10^{-4}$ mol/L or more and 0.12 mol/L or less.

In one example, after all the organic acids have been added, the mass ratio of the total amount A of the organic acids to the amount T of Ti of the titanium oxide particles (A/T, g/g) is preferably $1.5 \times 10^{-4}$ to 0.12, and more preferably 0.005 to 0.05. It is more preferably 0.007 to 0.010. By adjusting the mass ratio of the total amount A of the organic acid to the amount T of Ti of the titanium oxide particles to $1.5 \times 10^{-4}$ or more, the deposited titanium oxide surface can be uniformly modified with the organic acid, and the titanium oxide can be imparted with high heat resistance. When the mass ratio of the total concentration A of the organic acids to the amount T of Ti of the titanium oxide particles is 0.12 or less, dehydration condensation, as heating is performed, of the excess organic acids that have not completely modified the surface of the titanium oxide can be suppressed. As a result, the titanium oxide particles can be prevented from agglomerating and forming contact points. Therefore, when the titanium oxide particles are calcined at 700 °C, the particle size distribution does not become uneven due to the contact points which serve as starting points for sintering. When the organic acid is added to the acidic dispersion of the titanium oxide particles, the content of the titanium oxide in the acidic dispersion is not particularly limited, but is preferably 0.6 to 1.3 mol/L.

In another example, after all the organic acids are added, the total concentration A of the organic acids is preferably $1.5 \times 10^{-4}$ mol/L or more and 0.12 mol/L or less. It is more preferably from $1.5 \times 10^{-3}$ mol/L to 0.080 mol/L, and more preferably from 0.005 mol/L to 0.050 mol/L. By adjusting the concentration to $1.5 \times 10^{-4}$ mol/L or more, the deposited titanium oxide surface can be uniformly modified with an organic acid, and high heat resistance can be imparted to the titanium oxide. On the other hand, when the total concentration A of the organic acids is 0.12 mol/L or less, dehydration condensation, as heating is performed, of the excess organic acids that have not completely modified the surface of the titanium oxide can be suppressed. As a result, the titanium oxide particles can be prevented from agglomerating and forming contact points. Therefore, when the titanium oxide particles are calcined at 700 °C, the particle size distribution does not become uneven due to the contact points which serve as starting points for sintering. When the organic acid is added to the acidic dispersion of the titanium oxide particles, the content of the titanium oxide in the acidic dispersion is not particularly limited, but is preferably 0.6 to 1.3 mol/L.

For example, the content of titanium oxide in the dispersion of titanium oxide particles precipitated by hydrolysis of titanium tetrachloride is 0.85 mol/L or more and 0.95 mol/L or less, and the organic acid is an $\alpha$-hydroxycarboxylic acid. In this case, the amount of the organic acid to be added is preferably added such that the molar ratio of the amount (mol) of the $\alpha$-hydroxycarboxylic acid to be added to the amount (mol) of the titanium oxide in the aqueous dispersion is 0.00020 or more and 0.12 or less. More preferably, it is added to be 0.00070 or more and 0.010 or less, and most preferably, it is added to be 0.0050 or more and 0.0080 or less. If it is 0.00020 or more, the deposited titanium oxide surface can be uniformly modified with an organic acid, and high heat resistance can be imparted to the titanium oxide. On the other hand, when it is 0.12 or less, dehydration condensation, as heating is performed, of the excess organic acids that have not completely modified the surface of the titanium oxide can be suppressed. As a result, the titanium oxide particles can be prevented from agglomerating and forming contact points. Therefore, when the titanium oxide particles are calcined at 700 °C, the particle size distribution does not become uneven due to the contact points which serve as starting points for sintering.

Further, according to the investigation by the inventors, it has been found that even if the same low-molecular-weight organic acid as that of the present invention is added at a stage before the deposition of titanium oxide, for example, before or during the hydrolysis reaction of titanium tetrachloride, the heat resistance is not sufficiently improved (for example, Comparative Example 7 described below). This is considered to be because the titanium oxide surface is not effectively modified. It is considered that the reason why the titanium tetrachloride is not effectively modified is that the dispersion after the hydrolysis of the titanium tetrachloride does not contain the necessary concentration of the organic acid because the organic acid is incorporated into the aggregate in the step of forming the aggregate of the deposited titanium oxide.

<2-3. Neutralization Step>

After the step of modifying the titanium oxide particles, if necessary, a step of adding a basic substance, for example, an aqueous ammonia solution, to an acidic dispersion containing the low-molecular-weight organic acid to adjust the pH to 7 to 9, preferably 7.5 to 8.5, may be further included. For example, an aqueous ammonia solution having an ammonia concentration of 25% by mass may be added, and the pH of the acidic dispersion may be set to 8.0.

When the pH is set to 7 or higher, chloride ions from the raw material adsorbed on the surface of the titanium oxide particles are released, and can be easily removed by washing with water. When the pH is set to 9 or higher, the unreacted Ti component is precipitated as titanium hydroxide having poor crystallinity, which is not preferable because the heat resistance of the product is decreased.

<2-4. Titanium Oxide Purification Step>

The method for producing the highly heat-resistant anatase-type titanium oxide according to the present embodiment may further include a purification step of removing impurities from the highly heat-resistant anatase-type titanium oxide (modified titanium oxide) obtained in the modification step of the titanium oxide particles according to application needs.

For example, in this step, impurities containing chlorine (Cl), sulfur (S), carbon (C) and the like are removed from the titanium oxide dispersion (slurry) in order to improve the purity of the titanium oxide.

The purification method is not particularly limited, and at least one or more selected from the group consisting of an ultrafiltration membrane, a reverse osmosis membrane, an ion exchange resin, and an electrodialysis membrane may be used. That is, the method for producing the highly heat-resistant anatase-type titanium oxide according to the present embodiment may further include a purification step in which the highly heat-resistant anatase-type titanium oxide and impurities are separated by using at least one kind selected from the group consisting of an ultrafiltration membrane, a reverse osmosis membrane, an ion exchange resin, and an electrodialysis membrane, and the highly heat-resistant anatase-type titanium oxide is purified.

As the impurity concentration after purification, for example, in the use of a raw material of $BaTiO_3$, the total concentration of impurities containing chlorine (Cl) and sulfur (S) is preferably 100 ppm (mass/mass) or less, more preferably 50 ppm or less, and still more preferably 10 ppm or less. When the total concentration (chlorine atom and sulfur atom equivalent) of the impurities of chlorine (Cl) and sulfur (S) is 100 ppm (mass/mass) or less relative to the amount of titanium oxide after purification, it is possible to suppress a decrease in the dielectric constant when the titanium oxide is used as a raw material of $BaTiO_3$.

The purified titanium oxide may be cracked if necessary. The cracking method is not particularly limited, but a method using a mortar, a ball mill or the like can be used.

EXAMPLE

Examples of the present invention will be described below, but the present invention is not limited to these examples.

(Example 1)

Dilute sulfuric acid having a concentration of 48% by mass was added to a titanium tetrachloride aqueous solution having a Ti concentration of 15% by mass (titanium tetrachloride of 59% by mass), so that the ratio of the amount of sulfuric acid to the amount of Ti was 0.080.

Pure water was added thereto, and the mixture was diluted so that the Ti concentration was 0.92 mol/L.

300 ml of the aqueous solution was heated to 85 °C at a heating rate of 0.2 °C/min using an external heater while being stirred at 300 rpm using a magnetic stirrer.

After the liquid temperature reached 85 °C, the temperature rise was immediately stopped, and the solution was allowed to stand for 24 h and allowed to cool to room temperature.

After cooling, citric acid monohydrate was added so that the molar ratio of the amount of citric acid to the amount of Ti was 0.00070 (mass ratio: 0.0017, citric acid concentration in dispersion: 0.00065 mol/L), and the pH of the acidic solution after the addition was adjusted to 1.0. A magnetic stirrer was used to stir at 300 rpm for 1 h. After stirring, an aqueous ammonia solution having an ammonia concentration of 25% by mass was added and the pH was set to 8.0.

The resulting slurry was then filtered through an ultrafiltration membrane, and the resulting titanium oxide was washed with ion-exchanged water. The washed titanium oxide was placed in an oven and dried at 150 °C.

By the FT-IR measurement method that will be described later, the obtained highly heat-resistant anatase-type titanium oxide powder was measured, and a COO$^-$M$^+$ peak was confirmed. The results are shown in Fig. 1.

The titanium oxide obtained by the evaluation method that will be described later was evaluated, and the results are shown in Table 1.

Further, the titanium oxide was calcined at 700 °C by a method that will be described later, and the obtained titanium oxide was evaluated, and the results are shown in Table 2.

(Example 2)

Highly heat-resistant anatase-type titanium oxide powder was obtained and evaluated in the same manner as in Example 1 except that citric acid monohydrate was added in such a manner that the molar ratio of the amount of citric acid monohydrate to the amount of Ti was 0.0070.

By the FT-IR measurement method that will be described later, the obtained highly heat-resistant anatase-type titanium oxide powder was measured, and a COO$^-$M$^+$ peak was confirmed. The results are shown in Fig. 1.

(Example 3)

Highly heat-resistant anatase-type titanium oxide powder was obtained and evaluated in the same manner as in Example 1, except that lactic acid was added in place of citric acid monohydrate in such a manner that the molar ratio of the amount of lactic acid to the amount of Ti was 0.00070.

(Example 4)

Highly heat-resistant anatase-type titanium oxide powder was obtained and evaluated in the same manner as in Example 1, except that lactic acid was added in place of citric acid monohydrate in such a manner that the molar ratio of the amount of lactic acid to the amount of Ti was 0.0073.

(Example 5)

Highly heat-resistant anatase-type titanium oxide powder was obtained and evaluated in the same manner as in Example 1, except that malic acid was added in place of citric acid monohydrate so that the molar ratio of the amount of malic acid to the amount of Ti was 0.00070.

(Example 6)

Highly heat-resistant anatase-type titanium oxide powder was obtained and evaluated in the same manner as in Example 1, except that malic acid was added in place of citric acid monohydrate so that the molar ratio of the amount of malic acid to the amount of Ti was 0.0070.

(Example 7)

Highly heat-resistant anatase-type titanium oxide powder was obtained and evaluated in the same manner as in Example 1, except that tartaric acid was added in place of citric acid monohydrate so that the molar ratio of the amount of tartaric acid to the amount of Ti was 0.00070.

(Example 8)

Highly heat-resistant anatase-type titanium oxide powder was obtained and evaluated in the same manner as in Example 1, except that tartaric acid was added in place of citric acid monohydrate so that the molar ratio of the amount of tartaric acid to the amount of Ti was 0.0070.

(Example 9)

Highly heat-resistant anatase-type titanium oxide powder was obtained and evaluated in the same manner as in Example 1, except that tartaric acid was added in place of citric acid monohydrate so that the molar ratio of the amount of tartaric acid to the amount of Ti was 0.070.

(Example 10)

Highly heat-resistant anatase-type titanium oxide powder was obtained and evaluated in the same manner as in Example 1, except that succinic acid was added in place of citric acid monohydrate so that the molar ratio of the amount of succinic acid to the amount of Ti was 0.0070.

(Comparative Example 1)

Dilute sulfuric acid having a concentration of 48% by mass was added to a titanium tetrachloride aqueous solution having a Ti concentration of 15% by mass (titanium tetrachloride of 59% by mass), so that the ratio of the amount of sulfuric acid to the amount of Ti was 0.080.
Pure water was added thereto, and the mixture was diluted so that the concentration of Ti was 0.92 mol/L.
300 ml of the aqueous solution was heated to 85 °C at a heating rate of 0.2 °C/min using an external heater while being stirred at 300 rpm using a magnetic stirrer.
After the liquid temperature reached 85 °C, the temperature rise was immediately stopped, and the solution was allowed to stand for 24 h and allowed to cool to room temperature.
After cooling, an aqueous ammonia solution having an ammonia concentration of 25% by mass was added, and the pH was adjusted to 8.0.
The resulting slurry was then filtered through an ultrafiltration membrane, and the resulting titanium oxide was washed with ion-exchanged water. The washed titanium oxide was placed in an oven and dried at 150 °C.
The titanium oxide obtained by the evaluation method that will be described later was evaluated, and the results are shown in Table 1 (Table 1-1, 1-2). Further, the titanium oxide was calcined at 700 °C by a method that will be described later, and the obtained titanium oxide was evaluated, and the results are shown in Table 2.

(Comparative Example 2)

Titanium oxide was obtained based on the method described in Example 1 of Patent Document 5 (Japanese Patent No. 5021106). Specifically, 690 mL of ion-exchanged water was placed in a reactor with a comb-shaped stirrer and preheated to 95 °C. Stirring was carried out at 300 rpm, and while being stirred and kept at 95 °C, 50 g of a titanium tetrachloride aqueous solution (Ti concentration: 18% by mass) was added dropwise to the solution at 20 °C over 30 seconds, the solution was stirred in the reactor, and the temperature was maintained at 95 °C for 4 minutes. The reactor was cooled to 50 °C in an ice bath for less than 1 min. The hydrochloric acid produced in the reaction was removed using an electrodialysis membrane.
The washed titanium oxide was placed in an oven and dried at 100 °C.
The titanium oxide obtained by the evaluation method that will be described later was evaluated, and the results are shown in Table 1 (Table 1-1, 1-2). Further, the titanium oxide was calcined at 700 °C by a method that will be described later, and the obtained titanium oxide was evaluated, and the results are shown in Table 2.

(Comparative Example 3)

Titanium oxide was obtained based on the method described in Example 1 of Patent Document 6 (WO 2016/002755). Specifically, while retarding a titanium tetrachloride aqueous solution of 100 g/L in terms of $TiO_2$ (Ti concentration 1.25 mol/L) at 2 °C, citric acid monohydrate was added and the mixture was stirred for 30 min. The pH was 0.4. The amount of the citric acid monohydrate added was 3% by mass in terms of anhydrous citric acid based on the amount of titanium tetrachloride contained in the aqueous solution in terms of titanium oxide. The obtained aqueous solution was used as a precursor aqueous solution.
The aqueous solution was then heated using an external heater and stirred at 92 °C for 30 min. Thereafter, the obtained solution was cooled to 70 °C, and the pH was adjusted to 6.5 with an ammonia solution (ammonia concentration: 25% by mass). The resulting slurry was then cooled to 25 °C and filtered through an ultrafiltration membrane, and the recovered titanium oxide was washed with ion-exchanged water. The washed titanium oxide was placed in an oven and dried at 60 °C.
The titanium oxide obtained by the evaluation method that will be described later was evaluated, and the results are shown in Table 1 (Table 1-1, 1-2). Further, the titanium oxide was calcined at 700 °C by a method that will be described later, and the obtained titanium oxide was evaluated, and the results are shown in Table 2.

Comparative Example 4

KAOCER 2000 (molecular weight: 2000) was prepared and evaluated in the same manner as in Example 1, except that KAOCER 2000 was added to citric acid monohydrate so that the mass ratio of the amount of KAOCER to the amount of Ti was 0.012.

(Comparative Example 5)

Titanium oxide powder was obtained and evaluated in the same manner as in Example 1, except that polyacrylic acid (molecular weight: 25000) was added in place of citric acid monohydrate so that the mass ratio of the amount of polyacrylic acid to the amount of Ti was 0.011.

(Comparative Example 6)

Dilute sulfuric acid having a concentration of 48% by mass was added to a titanium tetrachloride aqueous solution having a Ti concentration of 15% by mass (titanium tetrachloride of 59% by mass), so that the ratio of the amount of sulfuric acid to the amount of Ti was 0.080.
Pure water was added thereto, and the mixture was diluted so that the concentration of Ti was 0.92 mol/L.
300 ml of the aqueous solution was heated to 85 °C at a heating rate of 0.2 °C/min using an external heater while being stirred at 300 rpm using a magnetic stirrer.
After the liquid temperature reached 85 °C, the temperature rise was immediately stopped, and the solution was allowed to stand for 24 h and allowed to cool to room temperature.
After cooling, an aqueous ammonia solution having an ammonia concentration of 25% by mass was added to adjust the pH to 8.0.
After adjusting the pH, citric acid monohydrate was added so that the molar ratio of the amount of citric acid to the amount of Ti was 0.0070, and the mixture was stirred at 300 rpm for 1 h using a magnet stirrer.
The resulting slurry was then filtered through an ultrafiltration membrane, and the resulting titanium oxide was washed with ion-exchanged water. The washed titanium oxide was placed in an oven and dried at 150 °C.
The obtained titanium oxide was evaluated by the evaluation method that will be described later and the results are shown in Table 1 (Table 1-1, 1-2). Further, the titanium oxide was calcined at 700 °C by a method that will be described later, and the obtained titanium oxide was evaluated, and the results are shown in Table 2.

(Comparative Example 7)

Dilute sulfuric acid having a concentration of 48% by mass was added to a titanium tetrachloride aqueous solution having a Ti concentration of 15% by mass (titanium tetrachloride of 59% by mass), so that the ratio of the amount of sulfuric acid to the amount of Ti was 0.080.
To this, pure water and citric acid monohydrate were added so that the mass ratio of the amount of citric acid to the amount of Ti was 0.017, and diluted so that the amount concentration of Ti was 0.92 mol/L.
300 ml of the aqueous solution was heated to 85 °C at a heating rate of 0.2 °C/min using an external heater while being stirred at 300 rpm using a magnetic stirrer. The concentration of citric acid was less than 0.00015 mol/L.
After the liquid temperature reached 85 °C, the temperature rise was immediately stopped, and the solution was allowed to stand for 24 h and allowed to cool to room temperature.
After cooling, an aqueous ammonia solution having an ammonia concentration of 25% by mass was added, and the pH was adjusted to 8.0.
The resulting slurry was then filtered through an ultrafiltration membrane, and the resulting titanium oxide was washed with ion-exchanged water. The washed titanium oxide was placed in an oven and dried at 150 °C.
The titanium oxide obtained by the evaluation method that will be described later was evaluated, and the results are shown in Table 1 (Table 1-1, 1-2). Further, the titanium oxide was calcined at 700 °C by a method that will be described later, and the obtained titanium oxide was evaluated, and the results are shown in Table 2.

(Comparative Example 8)

Titanium oxide powder was obtained and evaluated in the same manner as in Example 1, except that malic acid was added in place of citric acid monohydrate so that the molar ratio of the amount of malic acid to the amount of Ti was 0.14.

(Comparative Example 9)

Titanium oxide powder was obtained and evaluated in the same manner as in Example 1, except that malic acid was added in place of citric acid monohydrate in such a manner that the molar ratio of the amount of malic acid to the amount of Ti (amount in terms of metallic titanium) was 0.00014.

[Evaluation Method]

The evaluation results of the XRD, BET, and DLC of the "titanium oxide particles before modification" shown in Table 1 (Table 1-1, 1-2) are the evaluation results of the titanium oxide particles obtained by the method only without the modification step in the above examples and comparative examples. The evaluation results of XRD, BET and SEM of the titanium oxide after the modification (before calcination) obtained in the above examples and comparative examples are the same as those of the titanium oxide particles before the modification obtained by the method only without the modification step.

Evaluation of the amount of carbon remaining in the modified titanium oxide (before calcination) obtained in the above examples and comparative examples and the calcined titanium oxide in the following calcination experiment was carried out by the following XRF measurement. The results are shown in Table 1 (Table 1-1, 1-2).

The modified titanium oxide obtained in each of the above examples and comparative examples was calcined and evaluated in the following calcination experiment as follows. The results are shown in Table 2.

<Calcination Test>

The titanium oxide obtained in each of the above examples and comparative examples was subjected to a calcination test as follows. First, 2 g of the obtained titanium oxide powder was placed in an alumina crucible, heated in an electric furnace from 25 °C to 700 °C in 2 hours under an atmosphere, and left in an environment of 700 °C for 2 hours. Thereafter, the alumina crucible containing the titanium oxide powder was taken out of the electric furnace and allowed to cool at room temperature (25 °C).

<Measurement of Content of Each Crystal Phase>

The X-ray diffraction measurement was carried out on each titanium oxide before and after the calcination test as follows, and the ratio of each crystal phase of anatase, rutile and brookite contained in the crystal phase of titanium oxide was calculated. The powder X-ray analysis measurement was carried out using the X'pert PRO manufactured by PANalytical Co., and the X-ray diffraction measurement was carried out under the following conditions. The measurement conditions were a tube voltage of 45 kV, a tube current of 40 mA, a measurement range of $2\theta$ = 20 to 35°, a sampling width of 0.0167°, and a scanning speed of 0.0192°/s by using a Cu-K$\alpha$1 line of a copper target.

In the measurement, the diffraction pattern of the sample was corrected by measuring the background only in the glass cell and subtracting the diffraction intensity of the background from the diffraction intensity measured in the sample including the titanium oxide and the glass cell. When the diffraction intensity at $2\theta$ of a sample including titanium oxide and a glass cell is $I_S$ ($2\theta$) and the diffraction intensity at $2\theta$ of only the glass cell is $I_B$ ($2\theta$), the diffraction intensity of titanium oxide after background correction is obtained by I ($2\theta$) = $I_S$ ($2\theta$)-$I_B$ ($2\theta$).

The content of the anatase crystal phase in the total crystal phases of titanium oxide obtained in each of the examples and comparative examples (anatase rate or anatase content of titanium oxide before modification) and the content of the anatase crystal phase in the total crystal phases of titanium oxide after the calcination treatment (residual rate of anatase) were calculated from $I_a$, $I_r$ and $I_b$ by each of the following equations.

$$\text{Anatase content } [\%] = \{I_a/(I_a + I_b + I_r)\} \times 100\%$$

$$\text{Residual rate of anatase } [\%] = \{I_a/(I_a + I_b + I_r)\} \times 100\%$$

In the above equations, $I_a$ is the intensity of the peak ($2\theta$ = 24.5 to 26.0°) corresponding to the anatase crystal phase; $I_r$ is the intensity of the peak corresponding to the rutile crystal phase ($2\theta$ = 26.6 to 28.1°); and $I_b$ is the intensity of the peak ($2\theta$ = 30.8 to 32.3°) corresponding to the brookite crystal phase.

<Measurement of BET Specific Surface Area>

The specific surface area of titanium oxide obtained in each of the above examples and comparative examples and titanium oxide after the calcination test was measured by the BET method using nitrogen gas using QUADRASORV evo manufactured by Quantachrome Co., Ltd (BET specific surface area ($m^2$/g)).

<Measurement of Average Primary Particle Size>

The average primary particle size of titanium oxide was converted from the BET specific surface area.

Using the specific surface area S ($m^2$/g) obtained by the above method, the average primary particle size was calculated from the following equation.

$$\text{Average primary particle size} = 6000/(S \times \rho)$$

Here, $\rho$ indicates the density (g/$cm^3$) of titanium oxide. Since the titanium oxide contains anatase as a main component, $\rho = 4.0$.

<Evaluation of Particle Size Distribution by Dynamic Light Scattering>

An evaluation method of the average particle size of the aggregates of the titanium oxide particles before modification was carried out by taking 1 mL of the titanium oxide slurry after synthesis in Comparative Example 1, diluting it 100 times, and then measuring it by using a dynamic light scattering method (Dynamic Light Scattering, DLS). See Table 1 (Table 1-1, 1-2).

Measurement equipment: ELSZ-2000, Otsuka Electronics Co., Ltd.
Measurement method: 1 ml of titanium oxide slurry was diluted to 100 ml with pure water and placed in a 2.5 ml disposable cell for measurement.

<Evaluation of Particle Size Distribution by Image Analysis>

As an evaluation sample, the titanium oxide powder obtained in each of the Examples and the Comparative Example was calcined at 700 °C for 2 hours in the calcination test. 0.1 g of the powder was placed on a carbon tape laid on a sample stand No. 3 made by Hitachi High-Tech Fielding, Ltd., an image with a magnification of 100,000 was taken using a scanning electron microscope. The scanning electron microscope was an S-5500 type electrolytic discharge scanning electron microscope manufactured by Hitachi High Technologies Co., Ltd. The photographed image was analyzed using the image analysis software Mac-View ver 4.0 manufactured by Mountech Co., Ltd., the particle size of 500 particles per visual field was approximated as a perfect circle to obtain the diameter, and the arithmetic average was calculated to calculate the particle size distribution.

<FT-IR Measurement>

A Fourier transform infrared spectrophotometer and FT/IR-M-500 (manufactured by Nippon Spectroscopy Co., Ltd.) were used for FT-IR measurement. The measurement conditions were a resolution of 4 $cm^{-1}$ and an integration frequency of 1024 times using the ATR method under a nitrogen atmosphere. Waveform separation of peaks at wave numbers from 1900 $cm^{-1}$ to 1200 $cm^{-1}$ in the infrared absorption spectrum was curve fitted so that the residual squared sum was 0.01 or less by using a spectrum analysis program attached to the control software of the FT/IR-M-500. The dry titanium oxide powder obtained in each of the examples and comparative examples was used for measurement. The obtained spectra of Examples 1 and 2 and the difference spectra of the spectra of Comparative Example 1 were obtained.

<XRF Measurement (Evaluation of Remaining Carbon Content)>

X-ray fluorescence analysis (X-ray Fluorescence, XRF) was performed under the following measurement conditions.

Using Simultxix 14, a multi-element X-ray fluorescence analyzer manufactured by Rigaku Corporation, 5 g of powder was molded into a sample retarder for an attached X-ray fluorescence analyzer, and measurement was carried out at 50 kV and 50 mA.

[Table 1]

| Table 1-1 | Modification Conditions of Titanium Oxide Particles | | | | | |
|---|---|---|---|---|---|---|
| | Organic Acids | Ti Concentration | Organic Acid/Ti | Organic Acid/Ti | Organic Acid Concentration | Solution pH |
| | | mol/L | mass ratio | molar ratio | mol/L | |
| Example 1 | Citric Acid | 0.92 | 0.0017 | 0.00070 | 0.00065 | 1.0 |
| Example 2 | Citric Acid | 0.92 | 0.017 | 0.0070 | 0.0065 | 1.0 |
| Example 3 | Lactic Acid | 0.92 | 0.00079 | 0.00070 | 0.00065 | 1.0 |
| Example 4 | Lactic Acid | 0.92 | 0.0082 | 0.0073 | 0.0067 | 1.0 |
| Example 5 | Malic Acid | 0.92 | 0.00086 | 0.00070 | 0.00065 | 1.0 |
| Example 6 | Malic Acid | 0.92 | 0.0086 | 0.0070 | 0.0065 | 1.0 |
| Example 7 | Tartaric Acid | 0.92 | 0.0013 | 0.00070 | 0.00065 | 1.0 |
| Example 8 | Tartaric Acid | 0.92 | 0.013 | 0.0070 | 0.0064 | 1.0 |
| Example 9 | Tartaric Acid | 0.92 | 0.13 | 0.070 | 0.065 | 1.0 |
| Example 10 | Succinic Acid | 0.92 | 0.010 | 0.0070 | 0.0065 | 1.0 |
| Comparative Example 1 | - | 0.92 | 0 | 0 | 0 | - |
| Comparative Example 2 | - | 0.21 | 0 | 0 | 0 | - |
| Comparative Example 3 | Citric Acid | - | <0.0004 (0.017[*1]) | <0.00016 | <0.00015 | 0.4 |
| Comparative Example 4 | KAOCER 2000 | 0.92 | 0.012 | - | - | 1.0 |
| Comparative Example 5 | Polyacrylic acid | 0.92 | 0.011 | - | - | 1.0 |
| Comparative Example 6 | Citric Acid | 0.92 | 0.017 | 0.0070 | 0.0065 | 8.0 |
| Comparative Example 7 | Citric Acid | 0.92 | <0.0004 (0.017[*1]) | <0.00016 | <0.00015 | 1.0 |
| Comparative Example 8 | Malic Acid | 0.92 | 0.17 | 0.14 | 0.13 | 1.0 |
| Comparative Example 9 | Malic Acid | 0.92 | 0.00017 | 0.00014 | 0.00013 | 1.0 |

| Table 1-2 | Modification Conditions of Titanium Oxide Particles before Modification | | | | | | Modification Conditions of Titanium Oxide Particles after Modification | | |
|---|---|---|---|---|---|---|---|---|---|
| | XRD | Nitrogen Adsorption | | Analysis by DLS | | | FT-IR | XRF (Before Firing [*3]) | XRF (After Firing [*3]) |
| | Anatase Ratio | BET | Average Primary Particle Size | D50 | D90 | D90/D50 | Modification layer | Remaining C | Remaining C |
| | [%] | [m²/g] | [nm] | [nm] | [nm] | [-] | | [wt%] | [ppm by mass] |
| Example 1 | 100 | 405 | 3.7 | 24 | 43 | 1.81 | Y | 0.11 | <6 |
| Example 2 | 100 | 405 | 3.7 | 24 | 43 | 1.81 | Y | 1.12 | <6 |
| Example 3 | 100 | 405 | 3.7 | 24 | 43 | 1.81 | Y | 0.072 | <6 |
| Example 4 | 100 | 405 | 3.7 | 24 | 43 | 1.81 | Y | 0.819 | <6 |
| Example 5 | 100 | 405 | 3.7 | 24 | 43 | 1.81 | Y | 0.080 | <6 |
| Example 6 | 100 | 405 | 3.7 | 24 | 43 | 1.81 | Y | 0.831 | <6 |
| Example 7 | 100 | 405 | 3.7 | 24 | 43 | 1.81 | Y | 0.12 | <6 |
| Example 8 | 100 | 405 | 3.7 | 24 | 43 | 1.81 | Y | 1.28 | <6 |
| Example 9 | 100 | 405 | 3.7 | 24 | 43 | 1.81 | Y | 11.1 | <6 |
| Example 10 | 100 | 405 | 3.7 | 24 | 43 | 1.81 | Y | 0.97 | <6 |
| Comparative Example 1 | 100 | 405 | 3.7 | 24 | 43 | 1.81 | N | <0.0006 | <6 |
| Comparative Example 2 | - | 377 | 4.0 | 3.4 | 5.5 | 1.62 | N | <0.0006 | <6 |
| Comparative Example 3 | 0 | 155 | 10 | -[*2] | -[*2] | -[*2] | N | 1.48 | 10 |
| Comparative Example 4 | 100 | 405 | 3.7 | 24 | 43 | 1.81 | Y | 1.04 | 20 |
| Comparative Example 5 | 100 | 405 | 3.7 | 24 | 43 | 1.81 | Y | 1.00 | 50 |
| Comparative Example 6 | 100 | 405 | 3.7 | 31 | 48 | 1.6 | N | 1.57 | <6 |
| Comparative Example 7 | 100 | 340 | 4.4 | 36 | 46 | 1.29 | Y | 1.63 | <6 |
| Comparative Example 8 | 100 | 405 | 3.7 | 24 | 43 | 1.81 | N | 17.1 | <6 |
| Comparative Example 9 | 100 | 405 | 3.7 | 24 | 43 | 1.81 | Y | 0.016 | <6 |

Annotations in Table 1 (Table 1-1, 1-2):

* 1: An addition ratio calculated using the amount of organic acid added before titanium oxide is precipitated by hydrolysis. It is not the amount of organic acid contained in the acidic dispersion obtained after hydrolysis deposition of titanium oxide.

\* 2: It could not be judged because it was remarkably aggregated.

\* 3: Before calcination: titanium oxide after modification, after calcination: titanium oxide calcined at 700 °C.

[Table 2]

| Table 2 | XRD | Nitrogen Adsorption After Calcination | | SEM Image Analysis | | | | |
|---|---|---|---|---|---|---|---|---|
| | Residual Anatase | BET | Average Primary Particle Size | D50 | D90 | D100 | D90/D50 | D100/D50 |
| | [%] | [m$^2$/g] | [nm] | [nm] | [nm] | [nm] | [-] | [-] |
| Example 1 | 90.3 | 11 | 141 | 82 | 121 | 154 | 1.47 | 1.88 |
| Example 2 | 84.3 | 13 | 115 | 66 | 104 | 130 | 1.58 | 1.97 |
| Example 3 | 89.8 | 6 | 235 | 68 | 100 | 130 | 1.46 | 1.89 |
| Example 4 | 88.6 | 6 | 250 | 85 | 126 | 154 | 1.47 | 1.80 |
| Example 5 | 91.5 | 7 | 227 | 74 | 100 | 109 | 1.35 | 1.47 |
| Example 6 | 89.4 | 7 | 214 | 88 | 119 | 154 | 1.35 | 1.75 |
| Example 7 | 82.1 | 6 | 259 | 81 | 113 | 130 | 1.39 | 1.59 |
| Example 8 | 83.4 | 7 | 214 | 72 | 103 | 130 | 1.42 | 1.79 |
| Example 9 | 82.7 | 5 | 312 | 81 | 113 | 130 | 1.39 | 1.59 |
| Example 10 | 93.4 | 11 | 140 | 56 | 73 | 92 | 1.31 | 1.64 |
| Comparative Example 1 | 51.5 | 6 | 238 | 101 | 169 | 218 | 1.67 | 2.17 |
| Comparative Example 2 | 0.0 | 0.10 | -* | -* | -* | -* | -* | -* |
| Comparative Example 3 | 0.0 | 0.11 | -* | -* | -* | -* | -* | -* |
| Comparative Example 4 | 93.2 | 8 | 187 | 212 | 338 | 366 | 1.60 | 1.73 |
| Comparative Example 5 | 90.4 | 6 | 234 | 90 | 194 | 218 | 2.15 | 2.41 |
| Comparative Example 6 | 36.8 | 6 | 242 | 98 | 151 | 203 | 1.53 | 2.07 |
| Comparative Example 7 | 38.2 | 1 | 1250 | 99 | 145 | 207 | 1.47 | 2.10 |
| Comparative Example 8 | 91.3 | 7 | 223 | 77 | 120 | 154 | 1.56 | 2.01 |
| Comparative Example 9 | 90.7 | 7 | 225 | 89 | 105 | 193 | 1.18 | 2.18 |

*It is sintered and cannot be analyzed.

<Discussion>

In contrast to Comparative Example 1, Examples 1 to 10 have large proportions of residual anatase phase after calcination at 700 °C for 2 hours. The particle size distribution is more uniform than that of Comparative Example 1. These results suggest that the surface of titanium oxide was stabilized by modifying the surface of titanium oxide with an organic acid and high heat resistance was developed.

In Comparative Example 2, when XRD measurement was performed after calcination at 700 °C for 2 hours, no residual anatase phase was confirmed. In contrast, Examples 1 to 10 exhibit a high residual rate of anatase even after calcination at 700 °C for 2 hours. In Comparative Example 2, grains grew coarsely when calcined at 700 °C for 2 hours. In comparison with Comparative Example 2, Examples 1 to 10 have a D100 of 155 nm or less and a D100/D50 of 2.00 or less even after calcination at 700 °C for 2 hours, suggesting that grain growth in the high temperature region is suppressed in comparison with conventional titanium oxide.

In Comparative Example 2, ammonia was added in the step of depositing titanium oxide, and it is considered that dispersed titanium oxide aggregates when the pH temporarily rises and the zeta potential changes. When the organic acid is added to the aggregated titanium oxide, the organic acid cannot be uniformly modified to the primary particles of the titanium oxide, and therefore it is considered that high heat resistance as in Examples 1 to 10 cannot be developed.

In Comparative Example 3, when XRD measurement was performed after calcination at 700 °C for 2 hours, no residual anatase phase was confirmed. In contrast, Examples 1 to 10 exhibit a high residual rate of anatase even after calcination at 700 °C for 2 hours. In Comparative Example 3, the grains grew coarsely when calcined at 700 °C for 2 hours. In comparison with Comparative Example 3, since Examples 1 to 10 have a D100 of 155 nm or less even after calcination at 700 °C for 2 hours, it is suggested that grain growth in the high temperature region is suppressed in comparison with conventional titanium oxide.

In Comparative Example 3, synthesis was carried out at a low Ti concentration in a step of depositing titanium oxide. Therefore, titanium oxide particles having low supersaturation and low crystallinity were precipitated at the time of synthesis. Therefore, the heat resistance was even lower than that of Comparative Example 1.

From this, it is considered that the high heat resistance of Examples 1 to 10 is derived not only from the effect of modifying the surface of titanium oxide with an organic acid, but also from the fact that titanium oxide with high crystallinity is synthesized by appropriately controlling the Ti concentration at the time of deposition.

Comparative Example 4 and Comparative Example 5 have low heat resistance in comparison with Example 2 despite the addition of an organic acid having a mass ratio similar to that of Example 2. This may be because, in Comparative Examples 4 and 5, since a polymer is used, the size of the organic substance is large relative to the titanium oxide particles to be modified, and the titanium oxide surface cannot be efficiently modified.

Comparative Example 6 has low heat resistance in spite of the addition of an equal amount of citric acid with Example 2. This may be because, in Example 2, citric acid is added to titanium oxide particles deposited in an acidic solution of pH 1 to modify the surface, whereas in Comparative Example 6, citric acid is added in a basic solution of pH 8.

Comparative Example 7 has low heat resistance in spite of the addition of the same amount of citric acid as Example 2. This may be because, in Example 2, citric acid is added to the deposited titanium oxide particles to modify the surfaces, whereas in Comparative Example 7, citric acid is added to the titanium tetrachloride aqueous solution which is the titanium oxide precursor.

When citric acid is added to the precursor aqueous solution before titanium oxide is precipitated, citric acid preferentially modifies the titanium oxide surface precipitated in the initial stage of the reaction. Therefore, it is considered that the modification state of the titanium oxide surface by citric acid is different between the titanium oxide particles deposited in the early stage of the reaction and the titanium oxide particles deposited in the late stage of the reaction. Therefore, when an organic acid is added to the precursor aqueous solution before the deposition of the titanium oxide particles as in Comparative Example 7, it is considered that the highly heat-resistant titanium oxide as in the Example cannot be obtained.

Although the malic acid added in Examples 5 and 6 is added to Comparative Example 8, highly heat-resistant titanium oxide is not obtained. In the case of Comparative Example 8, it is considered that this is because the amount of organic acid added is small relative to the amount of deposited titanium oxide.

When the amount of organic acid added to the deposited titanium oxide is remarkably small, it is considered that titanium oxide whose surface is not modified with organic acid is produced. Therefore, it is considered that Comparative Example 8 did not exhibit high heat resistance as in Example.

In Comparative Example 9, although malic acid added in Examples 5 and 6 is added, highly heat-resistant titanium oxide is not obtained. In the case of Comparative Example 9, it is considered that this is caused by an excess of the organic acid added to the amount of the deposited titanium oxide.

When the amount of organic acid to be added to the deposited titanium oxide is remarkably large, it is considered that an environment where the particles of the titanium oxide are easily sintered is created by crosslinking and flocculating the particles of the titanium oxide by causing dehydration condensation of the excess organic acids during drying. Therefore, it is considered that Comparative Example 9 did not exhibit high heat resistance as in the examples.

## Claims

1. A highly heat-resistant anatase-type titanium oxide, comprising

titanium oxide particles containing an anatase crystal phase at a content of 85% or more in the total crystal phases, and

a modification layer provided on surfaces of the titanium oxide particles,

wherein the modification layer is obtained by modifying the particles by using an acidic solution containing an organic acid having a molecular weight of 200 or less at a content of $1.5 \times 10^{-4}$ mol/L or more and 0.12 mol/L or less, and

a pH of the acidic solution is 0.2 to 5.

2. The highly heat-resistant anatase titanium oxide according to claim 1,
wherein the organic acid is at least one kind of organic acid selected from the group consisting of lactic acid, succinic acid, malic acid, tartaric acid and citric acid.

3. The highly heat-resistant anatase-type titanium oxide according to claim 1 or claim 2,
wherein a BET specific surface area of the titanium oxide particles is 300 to 500 $m^2$/g.

4. The highly heat-resistant anatase titanium oxide according to any one of claims 1 to 3,
wherein, in the acidic solution, the molar ratio of the total amount A of the organic acid to the amount T of the titanium oxide particles in terms of metal titanium (A/T, mol/mol) is $1.5 \times 10^{-4}$ or more and 0.12 or less.

5. The highly heat-resistant anatase-type titanium oxide according to any one of claims 1 to 4, which satisfies all of the following (i) to (iii),

(i) the content of the anatase crystal phase in the total crystal phases after calcination at 700 °C for 2 hours is 80% or more;
(ii) D100 calculated from an SEM image of the titanium oxide after calcination at 700 °C for 2 hours is 200 nm or less; and
(iii) D100/D50 is 1.98 or less wherein the particle sizes D100 and D50 are calculated from the SEM image of the titanium oxide after calcination at 700 °C for 2 hours.

6. The highly heat-resistant anatase-type titanium oxide according to any one of claims 1 to 5, wherein the titanium oxide particles contain the anatase crystal phase at a content of 100% in the total crystal phases.

7. A method for producing a highly heat-resistant anatase-type titanium oxide, comprising:

modifying titanium oxide particles with an acidic solution containing $1.5 \times 10^{-4}$ mol/L or more and 0.12 mol/L or less of an organic acid having a molecular weight of 200 or less,
wherein a content of an anatase crystal phase of the titanium oxide particles before modification in the total crystal phases is 85% or more, and
a pH of the acidic solution is 0.2 to 5.

8. The method for producing the highly heat-resistant anatase-type titanium oxide according to claim 7, further comprising

producing titanium oxide particles prior to the modification of the titanium oxide particles,
wherein the step of producing titanium oxide particles is a step of obtaining a dispersion liquid of the titanium oxide particles by depositing titanium oxides by a hydrolysis reaction of titanium tetrachloride.

9. The method for producing the highly heat-resistant anatase titanium oxide according to claim 7 or claim 8,
wherein the organic acid is at least one kind of organic acid selected from the group consisting of lactic acid, malic acid, tartaric acid and citric acid.

10. The method according to any one of claims 7 to 9,
wherein a BET specific surface area of the titanium oxide particles is 300 to 500 $m^2$/g in the step of producing the titanium oxide particles.

11. The method for producing the highly heat-resistant anatase-type titanium oxide according to any one of claims 7 to 10, wherein, in the modification step of the titanium oxide particles, in the acidic solution, a molar ratio of the total amount A of the organic acid to the amount T of the titanium oxide particles before modification (A/T, mol/mol) is $1.5 \times 10^{-4}$

or more and 0.12 or less.

12. The method for producing the highly heat-resistant anatase-type titanium oxide according to any one of claims 8 to 11, wherein, in the step of producing the titanium oxide particles, sulfuric acid is added in the hydrolysis reaction of the titanium tetrachloride.

13. The method for producing the highly heat-resistant anatase-type titanium oxide according to any one of claims 7 to 12, further comprising:
purifying the highly heat-resistant anatase-type titanium oxide by separating the highly heat-resistant anatase-type titanium oxide and impurities using at least one kind selected from the group consisting of an ultrafiltration membrane, a reverse osmosis membrane, an ion exchange resin and an electrodialysis membrane.

EP 4 074 655 A1

FIG. 1

## INTERNATIONAL SEARCH REPORT

| | International application No. |
|---|---|
| | PCT/JP2020/044778 |

### A. CLASSIFICATION OF SUBJECT MATTER
Int.Cl. C01G23/053(2006.01)i
FI: C01G23/053

According to International Patent Classification (IPC) or to both national classification and IPC

### B. FIELDS SEARCHED

Minimum documentation searched (classification system followed by classification symbols)
Int.Cl. C01G23/053

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JST7580/JSTChina(JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2001-206720 A (TAKI CHEM CO., LTD.) 31 July 2001 (2001-07-31), entire text, all drawings, particularly, paragraphs [0013], [0015], examples 1, 2 | 1-13 |
| A | JP 2003-137549 A (CATALYSTS AND CHEM IND CO., LTD.) 14 May 2003 (2003-05-14), entire text, all drawings, particularly, example 13 | 1-13 |
| A | JP 2017-114700 A (SHOWA DENKO KK) 29 June 2017 (2017-06-29), entire text, all drawings, particularly, paragraph [0032], examples 8, 9 | 1-13 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 January 2021 | 19 January 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/044778

C (Continuation).    DOCUMENTS CONSIDERED TO BE RELEVANT

| Category* | Citation of document, with indication, where appropriate, of the relevant passages | Relevant to claim No. |
|---|---|---|
| A | CN 1521122 A (HENAN UNIVERSITY) 18 August 2004 (2004-08-18), entire text, all drawings | 1-13 |
| A | WO 2008/068062 A1 (EVONIK DEGUSSA GMBH) 12 June 2008 (2008-06-12), entire text, all drawings | 1-13 |
| A | JP 2019-524631 A (VENATOR GERMANY GMBH) 05 September 2019 (2019-09-05), entire text, all drawings | 1-13 |
| A | JP 2005-68001 A (CATALYSTS AND CHEM IND CO., LTD.) 17 March 2005 (2005-03-17), entire text, all drawings | 1-13 |

Form PCT/ISA/210 (second sheet) (January 2015)

**INTERNATIONAL SEARCH REPORT**
Information on patent family members

| International application No. |
| --- |
| PCT/JP2020/044778 |

| | | |
| --- | --- | --- |
| JP 2001-206720 A | 31 July 2001 | (Family: none) |
| JP 2003-137549 A | 14 May 2003 | US 2004/0265587 A1<br>entire text, all drawings,<br>particularly, example 13<br>WO 2003/037798 A1<br>EP 1449811 A1<br>CN 1599697 A |
| JP 2017-114700 A | 29 June 2017 | US 2018/0237311 A1<br>entire text, all drawings,<br>particularly, paragraph [0068],<br>examples 8, 9<br>WO 2017/111150 A1<br>EP 3393976 A1<br>KR 10-2018-0077220 A<br>CN 108367938 A |
| CN 1521122 A | 18 August 2004 | (Family: none) |
| WO 2008/068062 A1 | 12 June 2008 | CN 101195498 A<br>entire text, all drawings |
| JP 2019-524631 A | 05 September 2019 | WO 2017/211712 A1<br>entire text, all drawings<br>EP 3464183 A1<br>CN 109311694 A<br>KR 10-2019-0039069 A |
| JP 2005-68001 A | 17 March 2005 | KR 10-2004-0077593 A<br>entire text, all drawings |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019224915 A
- JP 2004149349 A
- JP 2019119630 A
- JP H07267641 A
- JP 2013155052 A
- JP 5021106 B
- WO 2016002755 A

**Non-patent literature cited in the description**

- **H. S. POTDAR. et al.** *J. Am. Ceram. Soc.,* 1996, vol. 79 (10), 2795
- **Y. IIDA ; S. OZAKI.** *J. Am. Ceram. Soc.,* vol. 44 (120), 1961
- **Z. WANG et al.** *J. Colloid interface Sci.,* 2015, vol. 448, 280-286